# EUROPEAN PATENT SPECIFICATION

(11) **EP 0 601 594 B1**
(45) Date of publication and mention of the grant of the patent: **18.03.1998**
(21) Application number: 93119965.7
(22) Date of filing: 10.12.1993
(51) Int. Cl.: B01J 13/04

(54) **Process for producing crystalline microballoons**
Verfahren zur Herstellung von kristallinen Mikrohohlkugeln
Procédé pour la production de microballons cristallins

(30) Priority: 11.12.1992 JP 353353/92; 16.03.1993 JP 81544/93
(43) Date of publication of application: 15.06.1994
(73) Proprietor: ASAHI GLASS COMPANY LTD., Chiyoda-ku Tokyo 100 (JP)
(72) Inventor: Sunahara, Kazuo, Asahi Glass Company Ltd., Yokohama-shi, Kanagawa-ken (JP)
(74) Representative: Müller-Boré & Partner Patentanwälte

(56) References cited:
- WO-A-92/09543
- US-A- 3 365 315
- US-A- 4 349 456
- US-A- 5 064 784
- PATENT ABSTRACTS OF JAPAN vol. 14, no. 242 (C-0721)23 May 1990 & JP-A-02 064 016 (SAKAMOTO MITSUHISA) 5 March 1990
- PATENT ABSTRACTS OF JAPAN vol. 12, no. 40 (C-474)5 February 1988 & JP-A-62 191 426 (ETSURO KATO) 21 August 1987
- PATENT ABSTRACTS OF JAPAN vol. 8, no. 71 (C-217)3 April 1984 & JP-A-58 223 606 (NIPPON SODA) 26 December 1983

## Description

The present invention relates to a process for producing crystalline microballoons and new crystalline microballoons produced thereby.

Heretofore, as microballoons (microbubbles or hollow microspheres)made of an inorganic material, vitreous fine hollow bodies so-called glass microballoons or microballoons made of e.g. alumina or zirconia, have been known. Further, resinous fine hollow bodies so-called plastic microballoons have been known. These microballoons are widely used as fillers in solid materials such as resins for weight reduction or heat insulation for transporting equipments, building materials, paints or refractories to meet various demands of the age.

For production of glass microballoons, a method is known which comprises heat-melting glass at a high temperature and blowing it off in the form of particles while foaming it with a blowing agent, to form microballoons (U.S. Pat. No. 3,365,315, No. 4,391,646, No. 4,767,726 and No. 5,064,784). Likewise, plastic balloons are produced by a method of heating, melting and foaming.

In these methods, it is necessary to heat-melt the material for microballoons itself. Accordingly, the material for microballoons has been limited to the glass which can be easily melted at a commercially practical temperature, for example, at a temperature of not higher than 1500°C. Thus, the material for glass microballoons has been limited to the one having a melting point which is not so high, such as soda-lime glass or soda borosilicate glass.

Further, in such a conventional method for glass microballoons, microballoons are produced by such an operation that molten glass is blown off in the form of particles while being foamed, as mentioned above, whereby the average particle size of the resulting microballoons is usually as large as from 50 to 5000 µm, and it has been difficult to obtain balloons having a very small average particle size.

For production of ceramic microballoons, a method similar to that of producing glass microballoons is known. In these methods, it is necessary to heat-melt the material for microballoons. Thus, an alkali component is added to the materials in order to decrease the melting temperature.

Furthermore, in the conventional method involving heating and melting of the material, the apparatus is necessarily large-sized and expensive, and such a method is not suitable for producing a small quantity or various types of microballoons.

JP-A-02 064 016 discloses a process for obtaining zirconia-based hollow microspherical particles comprising a spray drying step and a separate sintering step.

JP-A-62 191 426 discloses a method for producing zirconia polycrystalline microballoons comprising a spray-drying step and a separate roasting step.

JP-A-58 223 606 discloses a method of preparing ultrafine hollow microspheres of metallic oxide from a solution of a metallic compound in water.

WO-A-92 09543 discloses a method of forming hollow discrete particles comprising a spray-drying step and a separate calcining step.

US-A-3 365 315 discloses a method for forming minute glass bubbles by blowing or expanding glass particles.

It is an object of the present invention to provide a novel process for producing crystalline microballoons, whereby a room for selection of the material for crystalline microballoons is wide, it is possible to readily obtain microballoons made of a material which has never been used before in a conventional material with an extremely small average particle size, and the apparatus may be small-sized and inexpensive.

Thus, the present invention provides a process for producing crystalline microballoons, which comprises consecutive steps of atomizing a dispersion having an inorganic material or its precursor dispersed in a liquid medium, to form droplets of the dispersion, supplying the droplets into a high temperature atmosphere adjusted so that the liquid medium would rapidly evaporate and the inorganic material or its precursor would fuse or preferably sinter to form microballoons of the inorganic material, and recovering the microballoons thereby formed.

In the accompanying drawings;
Figure 1 is a schematic view illustrating an embodiment of the apparatus useful for carrying out the process of the present invention.
Figure 2 is an electron microscopic photograph showing the structures of crystalline microballoons obtained in Example 3.1.

Now, the present invention will be described in detail with reference to the preferred embodiments.

The inorganic material to be dispersed in a liquid medium in the process of the present invention, may be selected from an extremely wide range of inorganic materials. When an inorganic material desired for crystalline microballoons is used by itself as dispersed in a liquid medium, it may, for example, be an oxide such as silica, alumina, spinel, mullite, cordierite, titanium oxide or tin oxide, a nitride such as silicon nitride, aluminum nitride, titanium nitride, zirconium nitride or boron nitride, a carbide such as silicon carbide, titanium carbide or boron carbide, a metal such as copper, aluminum or lead, or carbon.

When a precursor which forms an inorganic material for crystalline microballoons by a reaction in the condition of preparation of the microballoons of the present invention, is used as dispersed in a liquid medium, one precursor may be used, or a plurality of precursors may be used as a mixture. Specifically, the precursor may be various elemental single substances, various acid salts such as sulfates, nitrates, phosphates, acetates and oxalates, hydroxides, chlorides, sulfides, oxides, nitrides, carbides, cyanides, and chelate compounds. As a typical example of the liquid medium, water is preferably used. Otherwise, an organic medium such as a halogenated hydrocarbon, an ether, an alcohol, a ketone, a hydrocarbon or an organic acid, may be used as the liquid medium. From the viewpoint of handling efficiency, the one having a boiling point of from 50 to 200°C, particularly from 80 to 120°C, is preferred.

The dispersed concentration and particle size in the dispersion of the inorganic material or its precursor affect the particle size, specific gravity, strength, etc. of microballoons thereby produced. The concentration of the dispersion is preferably from 0.1 to 80 wt%, more preferably from 1 to 10 wt%.

On the other hand, the particle size of the inorganic material or its precursor in the dispersion is preferably from 1 to 1000 nm, more preferably from 1 to 100 nm. The concentration is preferably from 0.1 to 50 wt%, more preferably from 1 to 50 wt%. The dispersion is preferably a uniform dispersion. Otherwise, it may be formed into a uniform colloidal solution by emulsifying it using a suitable emulsifier, as the case requires.

The particle size, specific gravity, strength, etc. of the resulting crystalline microballoons can be controlled by incorporating a suitable additive to the above dispersion, as the case requires. Such an additive is preferably used in amount of from 0.1 to 10 wt% based on the material for microballoons. As such an additive, a material may be used which has a melting point lower than the melting point of the material for microballoons and which is capable of controlling the growing rate of the crystals for forming microballoons. For example, when alumina microballoons are to be prepared, silica, magnesia, forsterite or various types of clay having a melting point lower than alumina and being capable of controlling the growth of alumina crystals, may, for example, be used.

In the process of the present invention, the above dispersion is firstly atomized into the droplets. The atomizing method is not particularly limited. However, a conventional method such as a supersonic method, a spray method or a rotary method may preferably be employed. The particle size of the droplets affects the particle size of the microballoons to be produced. The average particle size is preferably from 0.1 to 1000 µm, more preferably from 10 to 100 µm, although it depends also on the types of the inorganic material and the liquid medium.

The droplets are then supplied into a high temperature atmosphere. Here, the temperature and the atmosphere are controlled. The temperature is required to be within a temperature range wherein the liquid medium used will rapidly evaporate, and the inorganic material or its precursor will sinter or fuse to form crystalline microballoons of the inorganic material. The temperature for rapid evaporation is preferably at least three times, more preferably from 5 to 20 times, higher than the boiling point of the liquid medium, as represented by centigrade (°C). When water is used as the liquid medium, the temperature for rapid evaporation is preferably from 300 to 2200°C.

In the process of the present invention, if the material is heated beyond its melting point, adjacent crystal grains will fuse to one another and abnormally grow, whereby the strength of the resulting microballoons will be low. Accordingly, the high temperature atmosphere is preferably at a temperature not higher than the melting point of the material for microballoons, more preferably lower by about 100°C, particularly by about 200°C, than the melting point of the inorganic material.

The high temperature atmosphere may be set up in a single step system wherein the temperature is maintained uniformly throughout the operation, or in a two step system wherein the temperature is changed from a temperature range of a first step wherein the liquid medium will rapidly evaporate to a temperature range of a second step wherein the inorganic material or its precursor will fuse or melt to form microballoons, or may be set up in a multistep system of more than two steps. For example, in a case where the liquid medium is water and the inorganic material is alumina, the high temperature atmosphere may be adjusted so that the temperature in the vicinity of the inlet is preferably from 500 to 1000°C and the temperature in the vicinity of the outlet is preferably from 1000 to 1800°C.

It is a characteristic of the present invention that the inorganic material for crystalline microballoons is not necessarily heated to its melting point, so long as it is heated to a sintering temperature to obtain microballoons. By virtue of this characteristic, it is now possible to produce crystalline microballoons easily even from a material which used to be difficult to heat-melt. Further, it is possible to produce crystalline microballoons easily also from a material which contains no alkali component or a very small amount of an alkali component, which used to be difficult to melt.

The atmosphere for constituting the high temperature atmosphere is preferably an atmosphere suitable for the inorganic material and the liquid medium to be used. For example, in a case where crystalline microballoons made of a metal oxide are to be produced, an oxygen-containing atmosphere such as atmospheric air is selected for use. Likewise, in the case of a metal nitride, a nitrogen gas atmosphere is selected, and in the case of a metal, a reducing atmosphere such as hydrogen gas is selected. In the case where microballoons are produced from a precursor of an inorganic material by means of a reaction in the high temperature atmosphere producing microballoons of the present invention, an atmosphere suitable for such a reaction is employed.

Spraying of the droplets into the high temperature atmosphere may be carried out by various means. The high temperature atmosphere may be formed in e.g. a tubular furnace or a fluidized bed furnace. Preferred specific means for spraying droplets include, for example, a supersonic atomizer, a spray atomizer and a rotary disc atomizer, and the droplets are sprayed by such an atomizer into the above furnace at a linear speed of the droplets being preferably at least 0.01 m/sec, more preferably from 0.1 to 10 m/sec.

The droplets are maintained in the above high temperature atmosphere usually from 10 seconds to 30 minutes, although the retention varies depending upon the type of the inorganic material, whereby microballoons will be formed, in some cases, accompanied by the above mentioned reaction. The formed crystalline microballoons will be collected in such a manner that, for example, in the case of a tubular furnace, microballoons discharged from the tubular furnace are collected by means by a bag filter or a liquid medium such as water. The collected crystalline microballoons may have various average particle sizes depending upon the sizes of the droplets.

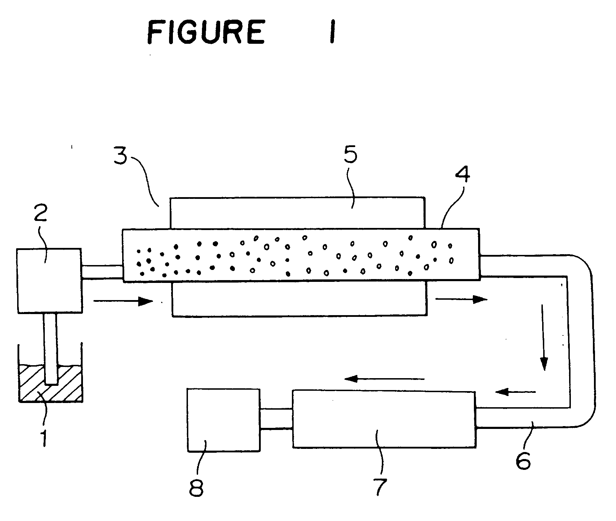

As an apparatus to be used for carrying out the process of the present invention, an apparatus having the construction as shown in Figure 1, may, for example, be employed. In Figure 1, the dispersion 1 is atomized by an atomizer 2 to form fine droplets, which are then supplied to a tubular furnace 3. The tubular furnace comprises a reaction tube 4 and a heater 5. The atmosphere is heated to a predetermined temperature by the heater 5. The droplets will be transported in the reaction tube 4 towards the right hand side in Figure 1 by a gas stream created by a volume expansion accompanied by evaporation of the liquid medium of the droplets. Here, a transporting gas may separately be introduced. Microballoons formed in the reaction tube may be recovered by various methods. In Figure 1, microballoons are introduced through a pipe 6 equipped with a heater to prevent condensation into a recovery filter 7 and recovered therein. For the recovery filter, a suction apparatus 8 may be employed to increase the recovery efficiency.

According to the process of the present invention, it is possible to obtain spherical crystalline microballoons having an average particle size of from 0.1 to 300 µm, if desired, substantially perfectly spherical microballoons having an average particle size of from 0.1 to 100 µm. Especially, it is possible to obtain fine microballoons with an average particle size of not more than 50 µm, which have been difficult to obtain heretofore. For example, it is possible to obtain microballoons with an average particle size of from 1 to 20 µm, particularly from 1 to 10 µm. The wall thickness of the microballoons can be controlled by adjusting e.g. the concentration or particle size of atomized droplets or the heating conditions. It is possible to obtain microballoons having a bulk density of from 0.01 to 2.0 g/cm³, although the bulk density may vary depending upon the material. Further, since the microballoons produced by the present invention have a crystalline structure, preferably a polycrystalline network structure and have substantially perfectly spherical shapes, the pressure collapse strength is as high as at least 1000 kg/cm², especially at least 1500 kg/cm². Further, the flowability is excellent, and when the microballoons are mixed with a resin or the like, they are free from breakage during the mixing, and the surface smoothness of the resulting molded product of the resin will be excellent.

The alkali content of the microballoons obtainable by the present invention can be controlled within a wide range. If necessary, it is possible to obtain crystalline microballoons having a very low alkali content as never has been possible heretofore. It is possible to produce microballoons having excellent water resistance, preferably with an alkali elution degree of not higher than 0.01 meq/g, more preferably not higher than 0.001 meq/g. Here, the alkali elution degree is determined in such a manner that a sample is put in pure water so that it constitutes 10 wt% and left to stand at 60°C for 24 hours, and then the alkali elution degree is measured. In the process of the present invention, the presence of an alkali component is not required for formation of microballoons by sintering, as the melting step is not required. The alkali content in crystalline microballoons is preferably not higher than 0.1 wt%, more preferably not higher than 0.01 wt%.

According to the process of the present invention, it is possible to produce crystalline microballoons of various metal oxides. For example, it is possible to produce crystalline microballoons made of an oxide of a transition metal such as scandium, titanium, vanadium, chromium, manganese, iron, cobalt, nickel, copper, zinc, yttrium, zirconium, niobium, molybdenum, ruthenium, rhodium, palladium, tantalum, tungsten, lanthanide or actinide, or an oxide of a semi metal element such as boron, aluminum, silicon, gallium, germanium, indium, tin, antimony, thallium, lead or bismuth. It is also possible to produce crystalline microballoons made of an oxide of a Group 2A element (such as beryllium, magnesium, calcium, strontium or barium) or a Group 1A element (lithium, sodium or potassium). Among them, those which are instable by themselves, such as oxides of Group 1A elements, may preferably be used as chemically reacted with suitable other components.

Crystalline microballoons made of a double oxide may likewise be produced. Specific examples of such a double oxide include zinc ferrite (ZnO·Fe₂O₃), barium ferrite (BaO·6Fe₂O₃), aluminum titanate (Al₂O₃·TiO₂), barium titanate (BaO·TiO₂), mullite (3Al₂O₂·2SiO₂), cordierite (2MgO·2Al₂O₃·5SiO₂), spinel (MgO·Al₂O₃), steatite (MgO·SiO₂), zircon (ZrO₂·SiO₂), forsterite (2MgO·SiO₂), eucryptite (LiO₂·Al₂O₃·2SiO₂), β-spodumen (LiO₂·Al₂O₃·4SiO₂) and aluminum borate (9Al₂O₃·2B₂O₃).

According to the process of the present invention, the material for crystalline microballoons is not limited to an oxide, and it is possible to obtain crystalline microballoons made of a material such as a nitride or carbide, which have not been obtained heretofore. As the nitride, aluminum nitride (AlN; wurtzite structure or hexagonal system), silicon nitride (Si₃N₄; hexagonal system), tantalum nitride (TaN; hexagonal system) or boron nitride (BN; hexagonal system) may, for example, be preferred. As the carbide, silicon carbide (SiC; diamond structure), zirconium carbide (ZrC; isometric system) or tungsten carbide (WC; hexagonal system) may, for example, be preferred.

Likewise, it is possible to produce crystalline microballoons made of a metal. The metal is not particularly limited, and various metal elements may be used alone or in combination as an alloy or intermetallic compound, or as a mixture of two or more of them. The metal is preferably the one which is hardly reactive to form a compound such as an oxide. For example, a noble metal such as gold, silver, copper or platinum, or lead, is preferred. The metal may be dispersed as a simple substance in the droplets, or a metal may be formed by a reaction at a high temperature. It is also possible to produce crystalline microballoons of a simple substance such as graphite.

The mechanism for formation of crystalline microballoons in the present invention is not fully understood, but is considered to be as follows. When the dispersion of a material is atomized and supplied in the form of droplets into the high temperature atmosphere, the liquid medium will rapidly evaporate at the surface of the droplets. As a result, in the case of the dispersion, the material dispersed in the medium will aggregate along the interface of the droplets in spherical forms corresponding to the shapes of the droplets.

The liquid medium remaining in the interior of droplets will evaporate and dissipate through spaces of precipitates precipitated in spherical forms into the atmosphere, and at the same time, the material dissolved or dispersed in the interior of the droplets will move in the centrifugal direction along with the evaporation of the liquid medium and will precipitate around the above mentioned spherical precipitates, so that the precipitates will grow and densify and the interior of the spherical forms will be hollow.

In the case where a precursor of an inorganic material is used, the desired inorganic material will be formed during the process of precipitation or aggregation, in some cases by a reaction with the atmosphere. For example, in the case of an oxygen-containing atmosphere, it may react with oxygen to form an oxide. Then, the precipitated material or the aggregated material is sintered or fused at a high temperature and further densified to finally form hollow microballoons having high strength.

Now, the present invention will be described in further detail with reference to Examples. However, it should be understood that the present invention is by no means restricted to such specific Examples.

Using various dispersions, microballoons were prepared by an apparatus as shown in Figure 1. In this apparatus, the dispersion was atomized by a supersonic atomizer (frequency: 2MHz) into droplets, which were then introduced into a tubular furnace (length of the heating zone: 50 cm, diameter: 9 cm). Formed microballoons were collected by a bag filter (a glass cloth coated with a fluorine resin). In some Examples, a two step tubular furnace comprising two tubular furnaces of the same type disposed in series, was employed. The size of droplets and the temperature of the tubular furnace were suitably adjusted. The analysis of microballoons obtained in each Example was carried out by the following methods.

Shape: Microballoons were mixed with an epoxy resin and cured, the cured resin was cut, and the cut surface was polished to expose the cross sections of the microballoons. Then, gold was vapor-deposited thereon, and the shapes were inspected by a scanning electron microscope JSM-T300 model, manufacture by Nippon Denshi K.K.

Average particle size: Microballoons were fixed on an adhesive tape. Then, gold was vapor-deposited thereon, followed by observation by a scanning electron microscope JSM-T300 model manufactured by Nippon Denshi K.K., whereupon the average particle size (diameter) was calculated by the image analysis.

Crystal phase: Microballoons were pulverized for 30 minutes in an agate mortar, and the crystal phase was identified by an X-ray diffraction apparatus (Gaiga flex, trade name) manufactured by Kabushiki Kaisha Rigaku.

Bulk density: The bulk density was measured as a tap density of microballoons by a vibration type specific gravity measuring apparatus KRS-406 manufactured by Kuramochi Kagakukiki Seisakusho (measuring conditions: 1/3 Hz, up-down of 30 mm: 700 times).

True specific gravity: The true specific gravity was measured by a gas-substitution method using an argon gas by means of a microvolume picnometer manufactured by Shimadzu Corporation. Here, the true specific gravity is the one obtained by dividing the mass of microballoons by the volume including the space portions.

Pressure collapse strength: The pressure at the time when 10% of microballoons were broken under hydraulic pressure, was obtained by a hydraulic pressure resistance tester, manufactured by Nichion Irikakikai Seisakusho.

Alkali elution degree: A sample was put in pure water so that it constituted 10 wt% and left to stand at 60°C for 24 hours, whereupon the amount of alkali metal elements eluted into pure water was measured by an elemental analysis by a plasma emission spectrochemical analyzer ICPS-1000 model manufactured by Shimadzu Corporation. The detection limit of alkali metals was 0.1 ppm.

### EXAMPLE 1.1

A dispersion having 10 wt% of manganese oxide particles having a particle size of 2 nm dispersed in water, was prepared. This dispersion was atomized at a flow rate of 1 ml/min to form droplets having an average particle size of 30 µm, which were introduced into a tubular furnace wherein atmospheric air was maintained at 1600°C. The obtained microballoons were spherical polycrystals of manganese oxide (tetragonal system MnO₂) having an average particle size of 1.5 nm, a bulk density of 0.032 g/cm³, a true specific gravity of 0.50 g/cm³ and a pressure collapse strength of 1430 kg/cm². No alkali elution was observed.

### EXAMPLES 1.2 TO 1.12

Using the dispersions as identified in Table 1 as starting materials, microballoons were prepared in the same manner as in Example 1.1 except that the temperature of the tubular furnace was as shown in Table 1. The evaluation results are shown in Table 2. In each case, the microballoons were spherical polycrystals, and no alkali elution was observed.

**Table 1**

| Example No. | Dispersed particles | Average particle size (nm) | Concentration (wt%) | Temp. (°C) |
|---|---|---|---|---|
| 1.2 | Zinc oxide | 3 | 10 | 1400 |
| 1.3 | Iron oxide | 6 | 10 | 1400 |
| 1.4 | Zirconium oxide (containing 5 mol % of yttrium oxide) | 3 | 10 | 1600 |
| 1.5 | Tungsten oxide | 3 | 10 | 1300 |
| 1.6 | Chromium oxide | 4 | 5 | 1750 |
| 1.7 | Ruthenium oxide | 3 | 10 | 1400 |
| 1.8 | Cobalt oxide | 3 | 10 | 1600 |
| 1.9 | Yttrium oxide | 3 | 10 | 1800 |
| 1.10 | Lanthanum oxide | 3 | 10 | 1800 |
| 1.11 | Cerium oxide | 3 | 10 | 1800 |
| 1.12 | Molybdenum oxide | 3 | 10 | 750 |

**Table 2**

| Example No. | Crystal phase | Average size of microballoons (µm) | Bulk density (g/cm³) | True specific gravity (g/cm³) | Pressure collapse strength (kg/cm²) |
|---|---|---|---|---|---|
| 1.2 | Wurtzite structure ZnO | 1.5 | 0.022 | 0.48 | 1310 |
| 1.3 | γ-Fe₂O₃ | 1.5 | 0.023 | 0.44 | 1660 |
| 1.4 | Monoclinic cubic sustem Mixture ZrO₂-Y₂O₃ | 1.3 | 0.025 | 0.49 | 2930 |
| 1.5 | Tetragonal system WO₂ | 1.6 | 0.080 | 0.96 | 1830 |
| 1.6 | Tetragonal system CrO₂ | 1.3 | 0.030 | 0.49 | 1460 |
| 1.7 | Rutile type RuO₂ | 1.9 | 0.029 | 0.46 | 1230 |
| 1.8 | Cubic system CoO | 1.3 | 0.049 | 0.66 | 1690 |
| 1.9 | Cubic system Y₂O₃ | 1.3 | 0.023 | 0.43 | 1530 |
| 1.10 | Hexagonal system La₂O₃ | 1.5 | 0.025 | 0.46 | 1480 |
| 1.11 | Cubic system CeO₂ | 1.8 | 0.039 | 0.43 | 1530 |
| 1.12 | Monoclinic system MoO₃ | 1.3 | 0.029 | 0.46 | 1090 |

### EXAMPLE 3.1

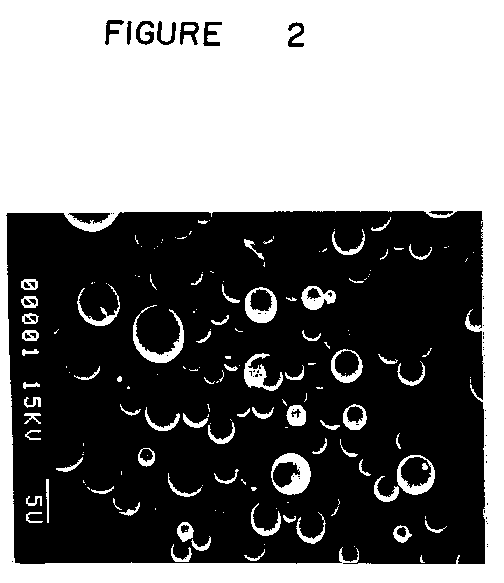

A colloidal solution having 10 wt% of aluminum oxide particles having a particle size of 6 nm dispersed therein, was prepared. This colloidal solution was atomized at a flow rate of 1 ml/min to form droplets having an average particle size of 90 µm, which were introduced into a tubular furnace wherein atmospheric air was maintained at 1500°C. The resulting microballoons were spherical polycrystals of corundum (α-Al₂O₃) having structures as shown in the electro microscopic photograph of Figure 2. In the photograph, the total length of the horizontal line at the bottom corresponds to 5 µm. This photograph shows a region wherein fractured microballoons exist. Further, the microballoons had an average particle size of 3.5 µm and a true specific gravity of 0.33 g/cm³, and no alkali elution was observed.

### EXAMPLE 3.4

A colloidal solution having 10 wt% of silicon dioxide particles having a particle size of 5 nm dispersed in water, was prepared. This colloidal solution was atomized at a flow rate of 0.6 ml/min to form droplets having an average particle size of 110 µm, which were introduced into a tubular furnace wherein atmospheric air was maintained at 1000°C. The obtained microballoons were spherical polycrystals of α-quartz. No alkali elution was observed. The evaluation results are shown in Table 5.

### EXAMPLE 3.5

A colloidal solution having 10 wt% of silicon dioxide powder having a particle size of 6 nm dispersed in water, was prepared. This colloidal solution was atomized at a flow rate of 1 ml/min to form droplets having an average particle size of 90 µm, which were introduced into a tubular furnace wherein atmospheric air was maintained at 1500°C. The obtained microballoons were spherical polycrystals of cristobalite. No alkali elution was observed. The evaluation results are shown in Table 5.

**Table 5**

| Example No. | Average size (µm) | Bulk density (g/cm³) | True specific gravity (g/cm³) | Pressure collapse strength (kg/cm²) |
|---|---|---|---|---|
| 3.4 | 6.3 | 0.030 | 0.41 | 1660 |
| 3.5 | 2.5 | 0.033 | 0.46 | 1560 |

### EXAMPLE 4.1

A colloidal solution having 10 wt% of tin oxide powder having a particle size of 3 nm dispersed in water, was prepared. This colloidal solution was atomized at a flow rate of 1 ml/min to form droplets having an average particle size of 30 µm which were introduced into a tubular furnace wherein atmospheric air was maintained at 1200°C. The obtained microballoons were spherical polycrystals of tin oxide (rutile type SnO₂) having an average particle size of 1.6 µm, a bulk density of 0.020 g/cm³, a true specific gravity of 0.46 g/cm³ and a pressure collapse strength of 1330 kg/cm². No alkali elution was observed.

### EXAMPLE 4.2 to 4.7

Using the dispersions as identified in Table 6 as starting materials, microballoons were prepared in the same manner in Example 4.1 except that the temperature of the tubular furnace was as shown in Table 6. The evaluation results are shown in Table 7. In each case, the microballoons were spherical polycrystals, and no alkali elution was observed.

**Table 6**

| Example No. | Dispersed particle | Particle size (nm) | Concentration (wt%) | Temp. (°C) |
|---|---|---|---|---|
| 4.2 | Germanium oxide | 3 | 10 | 1200 |
| 4.3 | Antimony oxide | 3 | 10 | 1200 |
| 4.4 | Bismuth oxide | 3 | 10 | 750 |
| 4.5 | Gallium oxide | 3 | 10 | 1500 |
| 4.6 | Beryllium oxide | 4 | 10 | 1900 |
| 4.7 | Magnesium oxide | 4 | 10 | 1650 |

**Table 7**

| Example No. | Crystal phase | Average size (µm) | Bulk density (g/cm³) | True specific gravity (g/cm³) | Pressure collapse strength (kg/cm²) |
|---|---|---|---|---|---|
| 4.2 | Tetragonal GeO₂ | 1.6 | 0.039 | 0.56 | 1590 |
| 4.3 | Monoclinic system Sb₂O₅ | 1.6 | 0.025 | 0.46 | 1230 |
| 4.4 | Tetragonal Bi₂O₅ | 1.6 | 0.40 | 0.86 | 1330 |
| 4.5 | Monoclinic cubic system Ga₂O₃ | 1.9 | 0.33 | 0.46 | 1330 |
| 4.6 | Sodium-chloride type BeO | 1.6 | 0.21 | 0.38 | 1760 |
| 4.7 | Sodium-chloride type MgO | 1.6 | 0.20 | 0.39 | 1360 |

### EXAMPLE 6.1

A dispersion having 0.63 wt% of aluminum oxide particles having a particle size of 6 nm and 0.37 wt% of silicon dioxide particles having a particle size of 3 nm dispersed in water, was prepared. This dispersion was atomized at a flow rate of 1 ml/min to form droplets having an average particle size of 30 µm, which were introduced into a tubular furnace wherein atmospheric air was maintained at 1400°C. The obtained microballoons were spherical polycrystals of mullite (3Al₂O₃·SiO₂) having an average particle size of 2.5 µm, a bulk density of 0.023 g/cm³, a true specific gravity of 0.44 g/cm³ and a pressure collapse strength of 2060 kg/cm². No alkali elution was observed.

### EXAMPLE 6.2 TO 6.9

Using the dispersions as identified in Table 10 as starting materials, microballoons were prepared in the same manner as in Example 6.1 except that the temperature of the tubular furnace was as shown in Table 10. The evaluation results are shown in Table 11. In each case, the microballoons were spherical polycrystals, and no alkali elution was observed.

**Table 10**

| Example No. | Dispersed particles | Particle size (nm) | Concentration (wt%) | Temp. (°C) |
|---|---|---|---|---|
| 6.2 | Iron oxide | 6 | 6.60 | 1400 |
| | Zinc oxide | 3 | 3.40 | |
| 6.3 | Aluminium oxide | 6 | 5.61 | 1700 |
| | Titanium oxide | 3 | 4.39 | |
| 6.4 | Titanium oxide | 3 | 1.72 | 1400 |
| | Barium oxide | 3 | 3.28 | |
| 6.5 | Magnesium oxide | 3 | 1.38 | 1400 |
| | Aluminium oxide | 6 | 3.49 | |
| | Silicon dioxide | 3 | 5.13 | |
| 6.6 | Aluminium oxide | 6 | 7.18 | 1800 |
| | Magnesium oxide | 3 | 2.82 | |
| 6.7 | Silicon dioxide | 6 | 7.18 | 1500 |
| | Magnesium oxide | 3 | 2.82 | |
| 6.8 | Zirconium oxide | 4 | 6.65 | 1400 |
| | Silicon dioxide | 3 | 3.35 | |
| 6.9 | Silicon dioxide | 6 | 4.27 | 1700 |
| | Magnesium oxide | 3 | 5.73 | |

**Table 11**

| Example No. | Crystal phase | Average size (µm) | Bulk density (g/cm³) | True specific gravity (g/cm³) | Pressure collapse strength (kg/cm²) |
|---|---|---|---|---|---|
| 6.2 | ZnFe₂O₄ | 1.8 | 0.022 | 0.46 | 1700 |
| 6.3 | Monoclinic system AlO₃·TiO₂ | 2.9 | 0.023 | 0.41 | 1360 |
| 6.4 | Tetragonal system BaTiO₃ | 1.6 | 0.033 | 0.51 | 1430 |
| 6.5 | Cordierite | 1.5 | 0.013 | 0.23 | 1560 |
| 6.6 | Spinel | 2.5 | 0.022 | 0.38 | 1760 |
| 6.7 | Steatite | 2.4 | 0.018 | 0.38 | 1560 |
| 6.8 | Zircon | 1.5 | 0.023 | 0.49 | 1760 |
| 6.9 | Forsterite | 2.4 | 0.022 | 0.42 | 1560 |

### EXAMPLE 7.4

A dispersion having 4.04 wt% of aluminum oxide having a particle size of 6 nm and 4.77 wt% of silicon dioxide particles having a particle size of 3 nm dispersed in an aqueous solution containing 0.952 wt% of lithium hydroxide, was prepared. This dispersion was atomized at a flow rate of 1 ml/min to form droplets having an average particle size of 30 µm, which were introduced into a tubular furnace wherein atmospheric air was maintained at 1200°C.

### EXAMPLE 7.5

A dispersion having 2.74 wt% of aluminum oxide particles having a particle size of 6 nm and 6.46 wt% of silicon dioxide particles having a particle size of 3 nm dispersed in an aqueous solution containing 0.64 wt% of lithium hydroxide, was prepared. This dispersion was atomized at a flow rate of 1 ml/min to form droplets having an average particle size of 30 µm, which were introduced into a tubular furnace wherein atmospheric air was maintained at 1200°C.

In each of Examples 7.4 to 7.5, the obtained microballoons were spherical polycrystals, and no alkali elution was observed. The evaluation results thereof are shown in Table 12.

**Table 12**

| Example No. | Crystal phase | Average size (µm) | Bulk density (g/cm³) | True specific gravity (g/cm³) | Pressure collapse strength (kg/cm²) |
|---|---|---|---|---|---|
| 7.4 | Eucryptite | 1.9 | 0.013 | 0.33 | 1560 |
| 7.5 | β-spodumen | 1.9 | 0.018 | 0.39 | 1560 |

### EXAMPLE 8.3

A dispersion having 0.12 wt% of aluminum oxide particles having a particle size of 3 nm and 0.36 wt% of carbon powder dispersed in water, was prepared. This dispersion was atomized at a flow rate of 1 ml/min to form droplets having an average particle size of 30 µm, which were introduced at a flow rate of 1 ml/min into a two step tubular furnace comprising a tubular furnace wherein a nitrogen atmosphere was maintained at 2200°C and a tubular furnace wherein a nitrogen atmosphere was maintained at 1200°C, connected in series.

### EXAMPLE 8.4

A dispersion having 1 wt% of silicon having an average particle size of 2 nm dispersed, was prepared. This dispersion was atomized at a flow rate of 0.6 ml/min to form droplets having an average particle size of 30 µm, which were introduced into a two step tubular furnace comprising a tubular furnace wherein a nitrogen atmosphere was maintained at 1500°C and a tubular furnace wherein a nitrogen atmosphere was maintained at 1400°C, connected in series.

### EXAMPLE 8.5

An aqueous solution having 2 wt% of tantalum chloride dissolved therein, was prepared. This solution was atomized at a flow rate of 0.6 ml/min to form droplets having an average particle size of 30 µm, which were introduced into a two step tubular furnace comprising a tubular furnace wherein an ammonia atmosphere was maintained at 2000°C and a tubular furnace wherein ammonia an atmosphere was maintained at 1300°C.

### EXAMPLE 8.6

A dispersion having 2.8 wt% of metal silicon having a particle size of 2 nm and 3.6 wt% of carbon powder dissolved in water, was prepared. This dispersion was atomized at a flow rate of 1 ml/min to form droplets having an average particle size of 30 µm, which were introduced into a two step tubular furnace comprising a tubular furnace wherein a carbon-installed vacuum atmosphere was maintained at 2200°C and a tubular furnace wherein a carbon-installed vacuum atmosphere was maintained at 1800°C, connected in series.

### EXAMPLE 8.8

A dispersion having 18.3 wt% of metal tungsten having a particle size of 4 nm and 1.2 wt% of carbon powder dispersed in water, was prepared. This dispersion was atomized at a flow rate of 1 ml/min to form droplets having an average particle size of 30 µm, which were introduced into a two step tubular furnace comprising a tubular furnace wherein a carbon-installed vacuum atmosphere was maintained at 2200°C and a tubular furnace wherein a carbon-installed vacuum atmosphere was maintained at 1800°C, connected in series.

### EXAMPLE 8.9

A dispersion having 1 wt% of silver powder having a particle size of 3 nm dispersed in water, was prepared. This dispersion was atomized at a flow rate of 1 ml/min to form droplets having an average particle size of 30 µm, which were introduced into a two step tubular furnace comprising a tubular furnace wherein an argon atmosphere was maintained at 950°C and a tubular furnace wherein an argon atmosphere was maintained at 700°C, connected in series.

### EXAMPLE 8.10

A dispersion having copper sulfide having an average particle size of 0.2 µm and copper oxide having an average particle size of 0.1 µm dispersed in pure water in a molar ratio of Cu₂S/Cu₂O = 0.5 and at a total concentration of 1 wt%, was prepared. This dispersion was atomized at a flow rate of 0.6 ml/min to form droplets having an average particle size of 30 µm, which were introduced into a tubular furnace wherein an argon atmosphere was maintained at 1100°C. 300°C, connected in series.

In each of Examples 8.3 to 8.6 and 8.8 to 8.10 the microballoons were spherical polycrystals, and no alkali elution was observed. The evaluation results thereof are shown in Table 13.

**Table 13**

| Example No. | Crystal phase | Average size (µm) | Bulk density (g/cm³) | True specific gravity (g/cm³) | Pressure collapse strength (kg/cm²) |
|---|---|---|---|---|---|
| 8.3 | AlN | 1.6 | 0.044 | 0.53 | 2090 |
| 8.4 | Si₃N₄ | 1.2 | 0.034 | 0.45 | 2160 |
| 8.5 | TaN | 2.8 | 0.071 | 0.99 | -* |
| 8.6 | SiC | 1.2 | 0.034 | 0.43 | 2690 |
| 8.8 | WC | 2.2 | 0.084 | 1.03 | 2090 |
| 8.9 | Metal silver | 1.3 | 0.069 | 0.83 | 690 |
| 8.10 | Metal copper | 3.2 | 0.074 | 0.95 | 560 |
| 8.11 | Metal lead | 2.8 | 0.081 | 0.99 | -* |

| | | | | | |
|---|---|---|---|---|---|
| * not examined | | | | | |

## Claims

1. A process for producing crystalline microballoons, which comprises consecutive steps of atomizing a dispersion having an inorganic material or its precursor dispersed in a liquid medium, to form droplets of the dispersion, supplying the droplets into a high temperature atmosphere, evaporating the liquid medium and sintering or fusing the inorganic material or its precursor in the high temperature atmosphere to form crystalline microballoons of the inorganic material, and recovering the microballoons thereby formed.

2. The process for producing crystalline microballoons according to Claim 1, wherein the concentration of the inorganic material or its precursor in the dispersion is from 0.1 to 80 wt%.

3. The process for producing crystalline microballoons according to Claim 1 or 2, wherein the droplets have an average particle size of from 0.1 to 1000 µm.

4. The process for producing crystalline microballoons according to Claim 1, 2 or 3, wherein the microballoons have a bulk density of from 0.01 to 2.0 g/cm³ and an average particle size of from 0.1 to 300 µm.

5. The process for producing crystalline microballoons according to Claim 1, 2, 3 or 4, wherein the liquid medium is water, and the high temperature atmosphere has a temperature of from 300 to 2200°C.

6. The process for producing crystalline microballoons according to Claim 1, 2, 3, 4 or 5, wherein the inorganic material is a metal oxide, a metal nitride, a metal carbide, or a metal.

7. The process for producing crystalline microballoons according to Claim 1, 2, 3, 4, 5 or 6, wherein the high temperature atmosphere has a temperature not higher than the melting point of the inorganic material.

## Patentansprüche

1. Verfahren zur Herstellung von kristallinen Mikrohohlkugeln, welches die aufeinanderfolgenden Schritte des Zerstäubens einer Dispersion mit einem anorganischen Material oder seinem Vorläufer, welches bzw. welcher in einem flüssigen Medium dispergiert ist, um Tröpfchen der Dispersion zu bilden, des Einspeisens der Tröpfchen in eine Hochtemperaturatmosphäre, des Verdampfens des flüssigen Mediums, des Sinterns oder Schmelzens des anorganischen Materials oder seines Vorläufers in der Hochtemperaturatmosphäre, um kristalline Mikrohohlkugeln des anorganischen Materials zu bilden, und des Wiedergewinnens der dadurch gebildeten Mikrohohlkugeln umfaßt.

2. Verfahren zur Herstellung von kristallinen Mikrohohlkugeln nach Anspruch 1, wobei die Konzentration des anorganischen Materials oder seines Vorläufers in der Dispersion 0,1 bis 80 Gew.-% beträgt.

3. Verfahren zur Herstellung von kristallinen Mikrohohlkugeln nach Anspruch 1 oder 2, wobei die Tröpfchen eine durchschnittliche Teilchengröße von 0,1 bis 1000 µm aufweisen.

4. Verfahren zur Herstellung von kristallinen Mikrohohlkugeln nach Anspruch 1, 2 oder 3, wobei die Mikrohohlkugeln eine Schüttdichte von 0,01 bis 2,00 g/cm³ und eine durchschnittliche Teilchengröße von 0,1 bis 300 µm aufweisen.

5. Verfahren zur Herstellung von kristallinen Mikrohohlkugeln nach Anspruch 1, 2, 3 oder 4, wobei das flüssige Medium Wasser ist und die Hochtemperaturatmosphäre eine Temperatur von 300 bis 2200°C aufweist.

6. Verfahren zur Herstellung von kristallinen Mikrohohkugeln nach Anspruch 1, 2, 3, 4 oder 5, wobei das anorganische Material ein Metalloxid, ein Metallnitrid, ein Metallcarbid oder ein Metall ist.

7. Verfahren zur Herstellung von kristallinen Mikrohohlkugeln nach Anspruch 1, 2, 3, 4, 5 oder 6, wobei die Hochtemperaturatmosphäre eine Temperatur aufweist, die nicht höher als der Schmelzpunkt des anorganischen Materials ist.

## Revendications

1. Procédé de fabrication de microballons cristallins, qui comprend les étapes consécutives consistant à atomiser une dispersion ayant une matière minérale ou son précurseur dispersé dans un milieu liquide, afin de former des gouttelettes de la dispersion, adresser les gouttelettes dans une atmosphère à température élevée, faire évaporer le milieu liquide et soumettre la matière minérale ou son précurseur à un frittage ou à une fusion dans l'atmosphère à température élevée, afin de former des microballons cristallins de la matière minérale, et récupérer les microballons ainsi formés.

2. Procédé de fabrication de microballons cristallins, selon la revendication 1, dans lequel la concentration de la matière minérale ou de son précurseur dans la dispersion est de 0,1 à 80% en poids.

3. Procédé de fabrication de microballons cristallins, selon la revendication 1 ou 2, dans lequel les gouttelettes ont une dimension moyenne de particule de 0,1 à 1000 µm.

4. Procédé de fabrication de microballons cristallins, selon la revendication 1, 2 ou 3, dans lequel les microballons ont une masse volumique apparente de 0,01 à 2,0 g/cm³ et une dimension moyenne de particule de 0,1 à 300 µm.

5. Procédé de fabrication de microballons cristallins, selon la revendication 1, 2, 3 ou 4, dans lequel le milieu liquide est l'eau, et l'atmosphère à température élevée a une température de 300 à 2200°C.

6. Procédé de fabrication de microballons cristallins, selon la revendication 1, 2, 3, 4 ou 5, dans lequel la matière minérale est un oxyde métallique, un nitrure métallique, un carbure métallique ou un métal.

7. Procédé de fabrication de microballons cristallins, selon la revendication 1, 2, 3, 4, 5 ou 6, dans lequel l'atmosphère à température élevée a une température non supérieure au point de fusion de la matière minérale.
